(19) Europäisches Patentamt
European Patent Office
Office européen des brevets

(11) **EP 4 194 504 A1**

(12) **EUROPEAN PATENT APPLICATION**

(43) Date of publication:
**14.06.2023 Bulletin 2023/24**

(21) Application number: **21212947.2**

(22) Date of filing: **07.12.2021**

(51) International Patent Classification (IPC):
**C08L 23/14** (2006.01)      **C08F 210/06** (2006.01)

(52) Cooperative Patent Classification (CPC):
(C-Sets available)
**C08F 210/06; C08L 23/142;** C08L 2205/035;
C08L 2207/20; C08L 2308/00; C08L 2314/02

(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
 • **MILEVA, Daniela**
  **4021 Linz (AT)**
 • **KAHLEN, Susanne Margarete**
  **4021 Linz (AT)**

 • **BRAUN, Hermann**
  **4021 Linz (AT)**
 • **GRESTENBERGER, Georg**
  **4021 Linz (AT)**
 • **SALLES, Christophe**
  **92400 Courbevoie (FR)**
 • **EGGETSBERGER, Mario**
  **4021 Linz (AT)**
 • **LEGRAS, Angelica Maëlle Delphine**
  **4021 Linz (AT)**

(74) Representative: **Maiwald GmbH**
**Elisenhof**
**Elisenstraße 3**
**80335 München (DE)**

(54) **RECYCLATE-CONTAINING POLYPROPYLENE COMPOSITIONS WITH EXCELLENT SURFACE QUALITY**

(57) A polypropylene composition (PC) being a mixed-plastic polypropylene blend having:
a) an MFR$_2$ of 5.0 to 19.0 g/10 min;
b) a flexural modulus of 1500 to 2200 MPa;
c) an MSE surface quality value of 3 to 19; and
d) a limonene content of 0.10 to 25.0 ppm;
wherein the polymeric part of said polypropylene composition (PC) has:
i) a C2(total) of 10.0 to 30.0 wt.-%;
ii) a crystalline fraction (CF) content of 60.0 to 80.0 wt.-%, said CF having a C2(CF) of 0.0 to 10.0 wt.-% and an iV(CF) of 1.0 to 2.0; and
iii) a soluble fraction (SF) content of 20.0 to 40.0 wt.-%, said SF having a C2(SF) of 45.0 to 65.0 wt.-% and an iV(SF) of 1.8 to 3.6 dL/g.

EP 4 194 504 A1

(52) Cooperative Patent Classification (CPC): (Cont.)

C-Sets
**C08F 210/06, C08F 2/001;**
**C08L 23/142, C08L 23/142, C08L 23/0815;**
C08F 210/06, C08F 210/16, C08F 2500/12,
C08F 2500/17, C08F 2500/27, C08F 2500/31,
C08F 2500/33, C08F 2500/34, C08F 2500/35,
C08F 2500/17, C08F 2500/33, C08F 2500/34,
C08F 2500/27

**Description**

**Field of the invention**

The present invention relates to a polypropylene composition (PC) being a mixed-plastic polypropylene blend containing recycled material and to articles comprising said polypropylene composition (PC).

**Background to the invention**

Polyolefins, in particular polyethylene and polypropylene, are increasingly consumed in large amounts in a wide range of applications, including packaging for food and other goods, fibres, automotive components, and a great variety of manufactured articles.

Polypropylene based materials offer significant potential for mechanical recycling, as these materials are extensively used in packaging. Taking into account the huge amount of waste collected compared to the amount of waste recycled back into the stream, there is still a great potential for intelligent reuse of plastic waste streams and for mechanical recycling of plastic wastes.

Development of polyolefins and polyolefin blends is often focussed on the continuous goal of improving the balance of mechanical properties, and also the more effective handling of waste streams, for both economical and also environmental reasons. It is usually understood that the use of recycled materials in polymer blends tends to lead to a degradation of mechanical properties, since the mechanical properties of virgin polymers can be easily modified by the polymerization conditions, whereas controlling the properties of a recycled material is intrinsically more difficult, resulting in poorer performance of these compositions.

The same holds true for the surface properties of such recycled materials, with the poor homogeneity of recyclate blends responsible for surface defects, for example so-called tiger stripes and black spots.

As such, there remains a need for recyclate-containing blends with good surface properties, enabling the use of recyclates in applications having strict requirements for surface quality, such as in automobile interiors.

**Summary of the Invention**

The present invention is based on the finding that the blending of a particular recyclate blend with two or more heterophasic propylene-ethylene copolymers, an ethylene-octene elastomer, a filler, and pigment/additive masterbatches results in the formation of polypropylene compositions with balanced mechanical profile, low emissions and excellent surface properties.

Therefore, in a first aspect, the present invention is directed, in its broadest sense, to a polypropylene composition (PC) being a mixed-plastic polypropylene blend, wherein the polypropylene composition (PC) has:

a) a melt flow rate (MFR$_2$), determined according to ISO 1133 at 230 °C and 2.16 kg, in the range from 5.0 to 19.0 g/10 min;
b) a flexural modulus, determined according to ISO 178 using $80 \times 10 \times 4$ mm$^3$ test bars injection-moulded in line with ISO 19069-2, in the range from 1500 to 2200 MPa;
c) an MSE surface quality value, determined on $440 \times 148 \times 2.8$ mm$^3$ test specimens produced at a filling time of 3 s during injection-moulding, in the range from 3 to 19; and
d) a limonene content, determined by solid phase microextraction (HS-SPME-GC-MS), in the range from 0.10 to 25.0 ppm;

wherein the polymeric part of said polypropylene composition (PC) has:

i) an ethylene content (C2(total)), determined by FT-IR spectroscopy calibrated by quantitative $^{13}$C-NMR spectroscopy, in the range from 10.0 to 30.0 wt.-%;
ii) a crystalline fraction (CF) content, determined according to CRYSTEX QC analysis, in the range from 60.0 to 80.0 wt.-%, said crystalline fraction (CF) having an ethylene content (C2(CF)), determined by FT-IR spectroscopy calibrated by quantitative $^{13}$C-NMR spectroscopy, in the range from 2.0 to 10.0 wt.-%, and an intrinsic viscosity (iV(CF)), determined according to DIN ISO 1628/1, in the range from 1.00 to 2.00 dL/g; and
iii) a soluble fraction (SF) content, determined according to CRYSTEX QC analysis, in the range from 20.0 to 40.0 wt.-%, said soluble fraction (SF) having an ethylene content (C2(SF)), determined by FT-IR spectroscopy calibrated by quantitative $^{13}$C-NMR spectroscopy, in the range from 45.0 to 65.0 wt.-%, and an intrinsic viscosity (iV(SF)), determined according to DIN ISO 1628/1, in the range from 1.80 to 3.60 dL/g.

It is preferred that the polypropylene composition (PC) is obtainable by blending at least components a) to h):

a) from 10.0 to 25.0 wt.-%, relative to the total weight of the polypropylene composition (PC), of a first heterophasic propylene-ethylene copolymer (HECO1), having a melt flow rate ($MFR_2$), determined according to ISO 1133 at 230 °C and 2.16 kg, in the range from 90 to 250 g/10 min and an intrinsic viscosity, determined according to DIN ISO 1628/1, of the soluble fraction (iV(SF)), according to CRYSTEX QC analysis, in the range from 2.00 to 4.00 dL/g;
b) from 0.0 to 25.0 wt.-%, relative to the total weight of the of the polypropylene composition (PC), of a second heterophasic propylene-ethylene copolymer (HECO2), having a melt flow rate ($MFR_2$), determined according to ISO 1133 at 230 °C and 2.16 kg, in the range from 3.0 to 30 g/10 min and an intrinsic viscosity, determined according to DIN ISO 1628/1, of the soluble fraction (iV(SF)), according to CRYSTEX QC analysis, in the range from 4.10 to 10.00 dL/g;
c) from 0.0 to 25.0 wt.-%, relative to the total weight of the polypropylene composition (PC), of a third heterophasic propylene-ethylene copolymer (HECO3), having a melt flow rate ($MFR_2$), determined according to ISO 1133 at 230 °C and 2.16 kg, in the range from 5.0 to 30 g/10 min and an intrinsic viscosity, determined according to DIN ISO 1628/1, of the soluble fraction (iV(SF)), according to CRYSTEX QC analysis, in the range from 2.00 to 4.00 dL/g;
d) from 20.0 to 35.0 wt.-%, relative to the total weight of the polypropylene composition (PC), of a mixed-plastic polypropylene blend (B) having an amount of defects with a particle size in the range from 0.05 to 0.10 $mm^2$ in the range from 0.1 to 1.0 particles/$cm^2$;
e) from 5.0 to 15.0 wt.-% of an ethylene-octene elastomer (EC);
f) from 5.0 to 20.0 wt.-% of an inorganic filler (F);
g) from 0.5 to 10 wt.-% of a pigment masterbatch (P), which comprises one or more pigments, wherein the total pigment content is in the range from 40.0 to 80.0 wt.-%, relative to the total weight of the pigment masterbatch (P); and
h) from 0.2 to 5.0 wt.-% of further additives (A),

wherein the total content of the second heterophasic propylene-ethylene copolymer and the third heterophasic propylene-ethylene copolymer (HECO2 + HECO3) is in the range from 10.0 to 25.0 wt.-%,
wherein the ratio of the content of the first heterophasic propylene-ethylene copolymer (HECO1) to the total content of the second heterophasic propylene-ethylene copolymer and the third heterophasic propylene-ethylene copolymer (HECO2 + HECO3), ([HECO1]/[HECO2 + HECO3]), is in the range from 0.50 to 1.33,
wherein the total contents of components a) to h) add up to at least 95 wt.-%, more preferably at least 98 wt.-%, most preferably 100 wt.-%, relative to the total weight of the polypropylene composition (PC).

In a further aspect, the present invention is directed to an article, preferably an injection-moulded article, comprising the polypropylene composition of the first aspect in an amount of at least 95 wt.-%, more preferably at least 98 wt.-%, most preferably at least 99 wt.-%.

Definitions

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.
Unless clearly indicated otherwise, use of the terms "a," "an," and the like refers to one or more.
In the following, amounts are given in % by weight (wt.-%) unless it is stated otherwise.
A propylene homopolymer is a polymer that essentially consists of propylene monomer units. Due to impurities especially during commercial polymerization processes, a propylene homopolymer can comprise up to 0.1 mol% comonomer units, preferably up to 0.05 mol% comonomer units and most preferably up to 0.01 mol% comonomer units.
A propylene copolymer is a copolymer of propylene monomer units and comonomer units, preferably selected from ethylene and $C_4$-$C_8$ alpha-olefins. A propylene random copolymer is a propylene copolymer wherein the comonomer units are randomly distributed along the polymer chain, whilst a propylene block copolymer comprises blocks of propylene monomer units and blocks of comonomer units. Propylene random copolymers can comprise comonomer units from one or more comonomers different in their amounts of carbon atoms.
The heterophasic propylene copolymers typically comprise:

a) a crystalline propylene homopolymer or copolymer matrix (M); and
b) an elastomeric rubber, preferably a propylene-ethylene copolymer (E);

In case of a random heterophasic propylene copolymer, said crystalline matrix phase is a random copolymer of propylene and at least one alpha-olefin comonomer.

The elastomeric phase can be a propylene copolymer with a high amount of comonomer that is not randomly distributed in the polymer chain but is distributed in a comonomer-rich block structure and a propylene-rich block structure. A heterophasic polypropylene usually differentiates from a one-phasic propylene copolymer in that it shows two distinct glass transition temperatures Tg which are attributed to the matrix phase and the elastomeric phase.

For the purposes of the present description and of the subsequent claims, the term "recycled waste" is used to indicate a material recovered from both post-consumer waste and industrial waste, as opposed to virgin polymers. Post-consumer waste refers to objects having completed at least a first use cycle (or life cycle), i.e. having already served their first purpose; while industrial waste refers to manufacturing scrap, which does not normally reach a consumer.

The term "virgin" denotes the newly produced materials and/or objects prior to their first use, which have not already been recycled.

The term "recycled material" such as used herein denotes materials reprocessed from "recycled waste".

A polymer blend denotes a mixture of two or more polymeric components. In general, the blend can be prepared by mixing the two or more polymeric components. Suitable mixing procedures known in the art are post-polymerization blending procedures. Post-polymerization blending can be dry blending of polymeric components such as polymer powders and/or compounded polymer pellets or melt blending by melt mixing the polymeric components.

A mixed-plastic polypropylene blend indicates that the blend predominantly comprises polypropylene; however, small amounts of other plastic are present. Recyclate blends, in particular post-consumer recyclate blends, are almost always mixed-plastic blends, which reflects the efficiency of the sorting in state of the art recycling processes.

The present invention will now be described in more detail.

**Detailed Description**

**Polypropylene composition (PC)**

The present invention is directed, in a first aspect, to a polypropylene composition (PC) being a mixed-plastic polypropylene blend.

The polypropylene composition (PC) has a melt flow rate ($MFR_2$), determined according to ISO 1133 at 230 °C and 2.16 kg, in the range from 5.0 to 19.0 g/10 min, more preferably in the range from 8.0 to 18.0 g/10 min, most preferably in the range from 10.0 to 17.0 g/10 min.

The polypropylene composition (PC) has a flexural modulus, determined according to ISO 178 using $80\times10\times4$ $mm^3$ test bars injection-moulded in line with ISO 19069-2, in the range from 1500 to 2200 MPa, more preferably in the range from 1600 to 2000 MPa, most preferably in the range from 1700 to 1900 MPa.

The polypropylene composition (PC) has an MSE surface quality value, determined on $440\times148\times2.8$ $mm^3$ test specimens produced at a filling time of 3 s during injection-moulding, in the range from 3 to 19, more preferably in the range from 3 to 17, most preferably in the range from 3 to 12.

The polypropylene composition (PC) has a limonene content, determined by solid phase microextraction (HS-SPME-GC-MS), in the range from 0.10 to 25.0 ppm.

The polypropylene composition (PC) preferably has a content of low boiling organic substances (LBS) determined by screening of organic emissions by thermo-desorption analysis in the range from 5 to 170 μg/g, more preferably in the range from 5 to 150 μg/g, most preferably in the range from 5 to 100μg/g.

The polypropylene composition (PC) preferably has a content of high boiling organic substances (HBS) determined by screening of organic emissions by thermo-desorption analysis in the range from 10 to 300 μg/g, more preferably in the range from 20 to 280 μg/g, most preferably in the range from 30 to 250 μg/g.

The polypropylene composition (PC) preferably has an amount of fogging, determined according to the gravimetric method DI 75201:2011-11, method B, in the range from 0.05 to 1.00 mg, more preferably in the range from 0.10 to 0.80 mg, most preferably in the range from 0.10 to 0.70 mg.

The polypropylene composition (PC) preferably has a scratch resistance at 10 N in the range from 0.00 to 1.00, more preferably in the range from 0.05 to 0.80, most preferably in the range from 0.05 to 0.70.

The polypropylene composition (PC) preferably has a Charpy Notched impact strength at 23 °C, determined according to ISO 179 using $80\times 10\times4$ $mm^3$ test bars injection-moulded in line with ISO 19069-2, in the range from 10.0 to 70.0 $kJ/m^2$, more preferably in the range from 13 to 60 $kJ/m^2$, most preferably in the range from 15 to 55 $kJ/m^2$.

The polypropylene composition (PC) preferably has a Charpy Notched impact strength at -20 °C, determined according to ISO 179 using $80\times 10\times4$ $mm^3$ test bars injection-moulded in line with ISO 19069-2, in the range from 4.0 to 12.0 $kJ/m^2$, more preferably in the range from 4.2 to 10.0 $kJ/m^2$, most preferably in the range from 4.4 to 7.0 $kJ/m^2$.

The polymeric part of the polypropylene composition (PC) may be characterized according to the the CRYSTEX QC method using trichlorobenzene (TCB) as a solvent. This method is described below in the determination methods section. The crystalline fraction (CF) contains for the most part the matrix phase and only a small part of the elastomeric phase and the soluble fraction (SF) contains for the most part the elastomeric phase and only a small part of the matrix phase. In some cases, this method results in more useful data, since the crystalline fraction (CF) and the soluble fraction (SF) more accurately correspond to the matrix and elastomeric phases respectively. Due to the differences in the separation methods of xylene extraction and CRYSTEX QC method the properties of XCS/XCI fractions on the one hand and crystalline/soluble (CF/SF) fractions on the other hand are not exactly the same, meaning that the amounts of matrix phase and elastomeric phase can differ as well as the properties.

The polymeric part of the polypropylene composition (PC) has an ethylene content (C2(total)), determined by FT-IR spectroscopy calibrated by quantitative $^{13}$C-NMR spectroscopy, in the range from 10.0 to 30.0 wt.-%, more preferably in the range from 12.0 to 22.0 wt.-%, most preferably in the range from 15.0 to 25.0 wt.-%.

The polymeric part of the polypropylene composition (PC) preferably has an intrinsic viscosity (iV(total)), determined according to DIN ISO 1628/1, in the range from 1.00 to 2.50 dL/g, more preferably in the range from 1.20 to 2.30 dL/g, most preferably in the range from 1.40 to 2.20 dL/g.

The polymeric part of the polypropylene composition (PC) has a soluble fraction (SF) content, determined according to CRYSTEX QC analysis, in the range from 20.0 to 40.0 wt.-%, more preferably in the range from 21.0 to 35.0 wt.-%, most preferably in the range from 22.0 to 30.0 wt.-%

Said soluble fraction (SF) has an ethylene content (C2(SF)) determined by FT-IR spectroscopy calibrated by quantitative $^{13}$C-NMR spectroscopy, in the range from 45.0 to 65.0 wt.-%, more preferably in the range from 48.0 to 60.0 wt.-%, most preferably in the range from 50.0 to 58.0 wt.-%.

Said soluble fraction (SF) also has an intrinsic viscosity (iV(SF)), determined according to DIN ISO 1628/1, in the range from 1.80 to 3.60 dL/g, more preferably in the range from 1.90 to 3.30 dL/g, most preferably in the range from 2.00 to 3.00 dL/g.

The polymeric part of the polypropylene composition (PC) has a crystalline fraction (CF) content, determined according to CRYSTEX QC analysis, in the range from 60.0 to 80.0 wt.-%, more preferably in the range from 65.0 to 79.0 wt.-%, most preferably in the range from 70.0 to 78.0 wt.-%

Said crystalline fraction (CF) has an ethylene content (C2(CF)) determined by FT-IR spectroscopy calibrated by quantitative $^{13}$C-NMR spectroscopy, in the range from 2.0 to 10.0 wt.-%, more preferably in the range from 2.5 to 9.5 wt.-%, most preferably in the range from 3.0 to 9.0 wt.-%.

Said crystalline fraction (CF) also has an intrinsic viscosity (iV(CF)), determined according to DIN ISO 1628/1, in the range from 1.00 to 2.00 dL/g, more preferably in the range from 1.20 to 1.90 dL/g, most preferably in the range from 1.30 to 1.80 dL/g.

The polypropylene composition (PC) is preferably obtainable by blending at least components a) to h):

a) from 10.0 to 25.0 wt.-%, relative to the total weight of the polypropylene composition (PC), of a first heterophasic propylene-ethylene copolymer (HECO1);
b) from 0.0 to 25.0 wt.-%, relative to the total weight of the of the polypropylene composition (PC), of a second heterophasic propylene-ethylene copolymer (HECO2);
c) from 0.0 to 25.0 wt.-%, relative to the total weight of the of the polypropylene composition (PC), of a third heterophasic propylene-ethylene copolymer (HECO3);
d) from 20.0 to 35.0 wt.-%, relative to the total weight of the polypropylene composition (PC), of a mixed-plastic polypropylene blend (B);
e) from 5.0 to 15.0 wt.-% of an ethylene-octene elastomer (EC);
f) from 5.0 to 20.0 wt.-% of an inorganic filler (F);
g) from 0.5 to 10.0 wt.-% of a pigment masterbatch (P); and
h) from 0.2 to 5.0 wt.-% of further additives (A).

The properties of each of these components are given in the respective sections below.

The total content of the second heterophasic propylene-ethylene copolymer and the third heterophasic propylene-ethylene copolymer (HECO2 + HECO3) is in the range from 10.0 to 25.0 wt.-%, more preferably in the range from 13.0 to 23.0 wt.-%, most preferably in the range from 16.0 to 21.0 wt.-%.

The ratio of the content of the first heterophasic propylene-ethylene copolymer (HECO1) to the total content of the second heterophasic propylene-ethylene copolymer and the third heterophasic propylene-ethylene copolymer (HECO2 + HECO3), ([HECO1]/[HECO2 + HECO3]), is in the range from 0.50 to 1.33 (i.e. from 1:2 to 4:3), more preferably in the range from 0.67 to 1.20 (i.e. from 2:3 to 6:5), most preferably in the range from 0.80 to 1.10 (i.e. from 4:5 to 11:10).

The total contents of components a) to h) add up to at least 95 wt.-%, more preferably at least 98 wt.-%, most preferably 100 wt.-%, relative to the total weight of the polypropylene composition (PC).

More preferably, the polypropylene composition (PC) is obtainable by blending at least components a) to h):

a) from 12.0 to 23.0 wt.-%, relative to the total weight of the polypropylene composition (PC), of a first heterophasic propylene-ethylene copolymer (HECO1);
b) from 0.0 to 23.0 wt.-%, relative to the total weight of the of the polypropylene composition (PC), of a second heterophasic propylene-ethylene copolymer (HECO2);
c) from 0.0 to 23.0 wt.-%, relative to the total weight of the of the polypropylene composition (PC), of a third heterophasic propylene-ethylene copolymer (HECO3);
d) from 22.0 to 33.0 wt.-%, relative to the total weight of the polypropylene composition (PC), of a mixed-plastic polypropylene blend (B);
e) from 7.0 to 13.0 wt.-% of an ethylene-octene elastomer (EC);
f) from 10.0 to 19.0 wt.-% of an inorganic filler (F);
g) from 2.0 to 10.0 wt.-% of a pigment masterbatch (P); and
h) from 0.2 to 5.0 wt.-% of further additives (A).

Most preferably, the polypropylene composition (PC) is obtainable by blending at least components a) to h):

a) from 14.0 to 21.0 wt.-%, relative to the total weight of the polypropylene composition (PC), of a first heterophasic propylene-ethylene copolymer (HECO1);
b) from 0.0 to 21.0 wt.-%, relative to the total weight of the of the polypropylene composition (PC), of a second heterophasic propylene-ethylene copolymer (HECO2);
c) from 0.0 to 21.0 wt.-%, relative to the total weight of the of the polypropylene composition (PC), of a third heterophasic propylene-ethylene copolymer (HECO3);
d) from 24.0 to 31.0 wt.-%, relative to the total weight of the polypropylene composition (PC), of a mixed-plastic polypropylene blend (B);
e) from 8.0 to 12.0 wt.-% of an ethylene-octene elastomer (EC);
f) from 12.0 to 18.0 wt.-% of an inorganic filler (F);
g) from 4.0 to 10.0 wt.-% of a pigment masterbatch (P); and
h) from 0.2 to 5.0 wt.-% of further additives (A).

The blending of the polypropylene composition (PC) may be carried out according to a process comprising the steps of:

a) providing the first heterophasic propylene-ethylene copolymer (HECO1), the optional second heterophasic propylene-ethylene copolymer (HECO2), the optional third heterophasic propylene-ethylene copolymer (HECO3), the mixed-plastic polypropylene blend (B), the ethylene-octene elastomer (EC), the inorganic filler (F), the optional pigment masterbatch and the further additives (A);
b) blending and extruding the first heterophasic propylene-ethylene copolymer (HECO1), the optional second heterophasic propylene-ethylene copolymer (HECO2), the optional third heterophasic propylene-ethylene copolymer (HECO3), the mixed-plastic polypropylene blend (B), the ethylene-octene elastomer (EC), the inorganic filler (F), the optional pigment masterbatch and the further additives (A) at a temperature in the range from 120 to 250 °C in an extruder, preferably a twin-screw extruder, thereby generating the polypropylene composition (PC), preferably in pellet form.

In particular, it is preferred to use a conventional compounding or blending apparatus, e.g. a Banbury mixer, a 2-roll rubber mill, Buss-co-kneader or a twin-screw extruder. More preferably, mixing is accomplished in a co-rotating twin-screw extruder. The polymer materials recovered from the extruder are usually in the form of pellets.

The properties of the individual components will now be detailed in the following sections.

**First heterophasic propylene-ethylene copolymer (HECO1)**

The first heterophasic propylene ethylene copolymer (HECO1) is provided in an amount in the range from 10.0 to 25.0 wt.-%, more preferably in the range from 12.0 to 33.0 wt.-%, most preferably in the range from 14.0 to 21.0 wt.-%, relative to the total weight of the polypropylene composition (PC).

The first heterophasic propylene ethylene copolymer (HECO1) has a melt flow rate ($MFR_2$), determined according to ISO 1133 at 230 °C and 2.16 kg, in the range from 90 to 250 g/10 min, more preferably in the range from 93 to 200 g/10 min, most preferably in the range from 95 to 150 g/10 min.

The first heterophasic propylene ethylene copolymer (HECO1) preferably has a soluble fraction (SF) content, determined according to CRYSTEX QC analysis, in the range from 8.0 to 19.5 wt.-%, more preferably in the range from 10.0 to 18.0 wt.-%, most preferably in the range from 13.0 to 17.0 wt.-%.

The first heterophasic propylene ethylene copolymer (HECO1) preferably has an ethylene content of the soluble fraction (C2(SF)), according to CRYSTEX QC analysis, determined by FT-IR spectroscopy calibrated by quantitative $^{13}$C-NMR spectroscopy, in the range from 31.0 to 45.0 wt.-%, more preferably in the range from 33.0 to 43.0 wt.-%, most preferably in the range from 36.0 to 42.0 wt.-%.

The first heterophasic propylene ethylene copolymer (HECO1) has an intrinsic viscosity, determined according to DIN ISO 1628/1, of the soluble fraction (iV(SF)), according to CRYSTEX QC analysis, in the range from 2.00 to 4.00 dL/g, more preferably in the range from 2.30 to 3.70 dL/g, most preferably in the range from 2.50 to 3.30 dL/g.

**Second heterophasic propylene-ethylene copolymer (HECO2)**

The second heterophasic propylene ethylene copolymer (HECO2) is provided in an amount in the range from 0.0 to 25.0 wt.-%, more preferably in the range from 0.0 to 23.0 wt.-%, most preferably in the range from 0.0 to 21.0 wt.-%, relative to the total weight of the polypropylene composition (PC).

The second heterophasic propylene ethylene copolymer (HECO2) has a melt flow rate (MFR$_2$), determined according to ISO 1133 at 230 °C and 2.16 kg, in the range from 3.0 to 30.0 g/10 min, more preferably in the range from 4.0 to 20.0 g/10 min, most preferably in the range from 4.5 to 10.0 g/10 min.

The second heterophasic propylene ethylene copolymer (HECO2) preferably has a soluble fraction (SF) content, determined according to CRYSTEX QC analysis, in the range from 20.0 to 40.0 wt.-%, more preferably in the range from 20.0 to 30.0 wt.-%, most preferably in the range from 20.0 to 26.0 wt.-%.

The second heterophasic propylene ethylene copolymer (HECO2) preferably has an ethylene content of the soluble fraction (C2(SF)), according to CRYSTEX QC analysis, determined by FT-IR spectroscopy calibrated by quantitative $^{13}$C-NMR spectroscopy, in the range from 18.0 to 30.0 wt.-%, more preferably in the range from 19.0 to 28.0 wt.-%, most preferably in the range from 20.0 to 26.0 wt.-%.

The second heterophasic propylene ethylene copolymer (HECO2) has an intrinsic viscosity, determined according to DIN ISO 1628/1, of the soluble fraction (iV(SF)), according to CRYSTEX QC analysis, in the range from 4.10 to 10.00 dL/g, more preferably in the range from 4.50 to 8.00 dL/g, most preferably in the range from 5.00 to 6.00 dL/g.

**Third heterophasic propylene-ethylene copolymer (HECO3)**

The third heterophasic propylene ethylene copolymer (HECO3) is provided in an amount in the range from 0.0 to 25.0 wt.-%, more preferably in the range from 0.0 to 23.0 wt.-%, most preferably in the range from 0.0 to 21.0 wt.-%, relative to the total weight of the polypropylene composition (PC).

The third heterophasic propylene ethylene copolymer (HECO3) has a melt flow rate (MFR$_2$), determined according to ISO 1133 at 230 °C and 2.16 kg, in the range from 5.0 to 30.0 g/10 min, more preferably in the range from 10.0 to 25.0 g/10 min, most preferably in the range from 12.0 to 20.0 g/10 min.

The third heterophasic propylene ethylene copolymer (HECO3) preferably has a soluble fraction (SF) content, determined according to CRYSTEX QC analysis, in the range from 20.0 to 40.0 wt.-%, more preferably in the range from 24.0 to 36.0 wt.-%, most preferably in the range from 27.0 to 33.0 wt.-%.

The third heterophasic propylene ethylene copolymer (HECO3) preferably has an ethylene content of the soluble fraction (C2(SF)), according to CRYSTEX QC analysis, determined by FT-IR spectroscopy calibrated by quantitative $^{13}$C-NMR spectroscopy, in the range from 31.0 to 45.0 wt.-%, more preferably in the range from 34.0 to 44.0 wt.-%, most preferably in the range from 37.0 to 43.0 wt.-%.

The third heterophasic propylene ethylene copolymer (HECO3) has an intrinsic viscosity, determined according to DIN ISO 1628/1, of the soluble fraction (iV(SF)), according to CRYSTEX QC analysis, in the range from 2.00 to 4.00 dL/g, more preferably in the range from 2.10 to 3.50 dL/g, most preferably in the range from 2.20 to 3.00 dL/g.

**Mixed-plastic polypropylene blend (B)**

The mixed-plastic polypropylene blend (B) is provided in an amount in the range from 20.0 to 35.0 wt.-%, more preferably in the range from 22.0 to 33.0 wt.-%, most preferably in the range from 24.0 to 31.0 wt.-%, relative to the total weight of the polypropylene composition (PC).

The mixed-plastic polypropylene blend (B) is a polypropylene rich recycled material, meaning that it comprises significantly more polypropylene than polyethylene. Recycled waste streams, which are high in polypropylene can be obtained for example from the automobile industry, particularly as some automobile parts such as bumpers are sources of fairly pure polypropylene material in a recycling stream.

Preferably, the polypropylene rich recycled material is obtained from recycled waste by means of plastic recycling processes known in the art. Such recyclates are commercially available, e.g. from Corepla (Italian Consortium for the collection, recovery, recycling of packaging plastic wastes), Resource Plastics Corp. (Brampton, ON), Kruschitz GmbH, Plastics and Recycling (AT), Vogt Plastik GmbH (DE), Mtm Plastics GmbH (DE) etc. Non-exhaustive examples of polypropylene rich recycled materials include: Purpolen®PP (Mtm Plastics GmbH), Axpoly® recycled polypropylene pellets (Axion Ltd) and PolyPropylene Copolymer (BSP Compounds).

During recycling, any reasonable measure will usually be taken for any components other than polyethylene and polypropylene to be reduced/removed as far as the final application or use suggests such measures; however, other components are often present in small amounts.

Other such components include polystyrene (PS), polyamides (PA), polyethylene terephthalate (PET), which are all present in as low an amount as possible, preferably below the detection limit.

The mixed-plastic polypropylene blend (B) preferably has a melt flow (MFR$_2$), determined according to ISO 1133 at 230 °C and 2.16 kg, in the range from 10.0 to 40.0 g/10 min, more preferably in the range from 12.0 to 35.0 g/10 min, most preferably in the range from 13.0 to 30.0 g/10 min.

The mixed-plastic polypropylene blend (B) preferably has an ethylene content (C2(total)), determined by FT-IR spectroscopy calibrated by quantitative $^{13}$C-NMR spectroscopy, in the range from 2.5 to 10.0 wt.-%, more preferably in the range from 3.0 to 9.0 wt.-%, most preferably in the range from 3.5 to 8.0 wt.-%.

The mixed-plastic polypropylene blend (B) preferably has a has a soluble fraction (SF) content, determined according to CRYSTEX QC analysis, in the range from 4.0 to 15.0 wt.-%, more preferably in the range from 4.5 to 13.5 wt.-%, most preferably in the range from 5.0 to 12.0 wt.-%.

The mixed-plastic polypropylene blend (B) preferably has a has a crystalline fraction (CF) content, determined according to CRYSTEX QC analysis, in the range from 85.0 to 96.0 wt.-%, more preferably in the range from 86.5 to 95.5 wt.-%, most preferably in the range from 88.0 to 95.0 wt.-%.

The mixed-plastic polypropylene blend (B) preferably has an ethylene content of the soluble fraction (C2(SF)), according to CRYSTEX QC analysis, determined by FT-IR spectroscopy calibrated by quantitative $^{13}$C-NMR spectroscopy, in the range from 20.0 to 55.0 wt.-%, more preferably in the range from 22.0 to 50.0 wt.-%, most preferably in the range from 24.0 to 48.0 wt.-%.

The mixed-plastic polypropylene blend (B) preferably has an ethylene content of the crystalline fraction (C2(CF)), according to CRYSTEX QC analysis, determined by FT-IR spectroscopy calibrated by quantitative $^{13}$C-NMR spectroscopy, in the range from 1.0 to 10.0 wt.-%, more preferably in the range from 1.5 to 9.5 wt.-%, most preferably in the range from 2.0 to 9.0 wt.-%.

The mixed-plastic polypropylene blend (B) preferably has an intrinsic viscosity, determined according to DIN ISO 1628/1, of the soluble fraction (iV(SF)), according to CRYSTEX QC analysis, in the range from 0.90 to 2.10 dL/g, more preferably in the range from 1.00 to 2.00 dL/g, most preferably in the range from 1.10 to 1.90 dL/g.

The mixed-plastic polypropylene blend (B) preferably has an intrinsic viscosity, determined according to DIN ISO 1628/1, of the crystalline fraction (iV(CF)), according to CRYSTEX QC analysis, in the range from 1.00 to 2.60 dL/g, more preferably in the range from 1.20 to 2.50 dL/g, most preferably in the range from 1.30 to 2.40 dL/g.

The mixed-plastic polypropylene blend (B) preferably has an inorganic residue content, as determined by calcination analysis according to DIN ISO 1172:1996, of 0.05 to 3.0 wt.-%, more preferably in the range from 0.50 to 2.5 wt.-%, most preferably in the range from 1 to 2.5 wt.-%

The mixed-plastic polypropylene blend (B) preferably has an amount of defects with a particle size in the range from 0.05 to 0.10 mm$^2$ in the range from 0.1 to 1.0 particles/cm$^2$, more preferably in the range from 0.1 to 0.8 particles/cm$^2$, most preferably in the range from 0.1 to 0.6 particles/cm$^2$.

The mixed-plastic polypropylene blend (B) preferably originates from post-industrial waste or post-consumer waste, most preferably from post-consumer waste.

The mixed-plastic polypropylene blend (B) preferably has a limonene content, determined by solid phase microextraction (HS-SPME-GC-MS), in the range from 0.10 to 25.0 ppm.

The presence of limonene is indicative that the mixed-plastic polypropylene blend (B) originates from post-consumer waste.

Further indications of the recycled-nature of the mixed-plastic polypropylene blend (B) include the presence of other polymers, such as polystyrene and polyamide-6, and the presence of fatty acids.

Accordingly, it is further preferred that the mixed-plastic polypropylene blend (B) comprises one or more of polystyrene, polyamide-6 and fatty acids, preferably comprises each of polystyrene, polyamide-6 and fatty acids.

The mixed-plastic polypropylene blend (B) preferably has a CIELAB colour space (L*a*b) of

i) L* of from 50.0 to 97.0, more preferably from 80.0 to 97.0;
ii) a* of from -5.0 to 0.0;
iii) b* of from 0.0 up to, but not including, 22.0.

For producing polypropylene compositions having a light colour, e.g. light grey, it is especially preferred that the L* value is in the range from 80.0 to 97.0.

Ethylene-octene elastomer (EC)

The ethylene-octene elastomer (EC) is an elastomeric copolymer containing ethylene monomers and 1-octene comonomers.

The ethylene-octene elastomer (EC) is provided in an amount in the range from 5.0 to 15.0 wt.-%, more preferably in the range from 7.0 to 13.0 wt.-%, most preferably in the range from 8.0 to 12.0 wt.-%, relative to the total weight of the polypropylene composition (PC).

The ethylene-octene elastomer (EC) preferably has a melt flow rate (MFR$_2$), determined according to ISO 1133 at 190 °C and 2.16 kg, in the range from 0.2 to 2.5 g/10 min, more preferably in the range from 0.3 to 1.5 g/10 min, most preferably in the range from 0.4 to 1.0 g/10 min.

The ethylene-octene elastomer (EC) preferably has a density, determined according to ISO 1183-187, in the range from 850 to 870 kg/m$^3$, more preferably in the range from 855 to 867 kg/m$^3$, most preferably in the range from 860 to 865 kg/m$^3$.

**Inorganic filler (F)**

The inorganic filler (F) is provided in an amount in the range from 5.0 to 20.0 wt.-%, more preferably in the range from 10.0 to 19.0 wt.-%, most preferably in the range from 12.0 to 18.0 wt.-%, relative to the total weight of the polypropylene composition (PC).

It is preferred that the inorganic filler is selected from the group containing talc, calcium carbonate, barium sulfate, mica, and mixtures thereof.

Most preferably, the inorganic filler (F) is talc.

It is preferred that the inorganic filler (F) has a median diameter (d$_{50}$) in the range from 1.0 to 15.0 $\mu$m, more preferably in the range from 2.0 to 10.0 $\mu$m, most preferably in the range from 2.5 to 5.0 $\mu$m.

It is preferred that the inorganic filler (F) has a top cut diameter (d$_{95}$) in the range from 2.0 to 30.0 $\mu$m, more preferably in the range from 4.0 to 20.0 $\mu$m, most preferably in the range from 5.0 to 10.0 $\mu$m.

**Pigment masterbatch (P)**

The polypropylene composition (PC) is preferably a pigmented polypropylene composition.

As such, a pigment masterbatch (P) is provided in an amount in the range from 0.5 to 10.0 wt.-%, more preferably in the range from 2.0 to 10.0 wt.-%, most preferably in the range from 4.0 to 10.0 wt.-%, relative to the total weight of the polypropylene composition (PC).

The pigment masterbatch has a total pigment content in the range from 40.0 to 80.0 wt.-%, relative to the total weight of the pigment masterbatch (P). The pigment masterbatch (P) may comprise one pigment, or it may comprise multiple pigments. When the pigment masterbatch (P) comprises more than one pigment, the pigment masterbatch may be provided as multiple pigment masterbatches, each containing a single pigment, wherein the sum of the amounts of the individual pigment masterbatches equals the total weight of the pigment masterbatch (P) according to the present invention.

The selection of the pigment depends on the intended colour of the polypropylene composition (PC). Beyond such considerations, the choice of suitable pigment is not restricted. The person skilled in the art would be able to select suitable pigment(s) to achieve a certain end colour of the composition.

**Additives (A)**

The further additives (A) are provided in an amount in the range from 0.2 to 5.0 wt.-%. The skilled practitioner would be able to select suitable additives that are well known in the art.

The additives (A) are preferably selected from antioxidants, UV-stabilisers, anti-scratch agents, mold release agents, acid scavengers, lubricants, anti-static agents, and mixtures thereof.

It is understood that the content of additives (A), given with respect to the total weight of the polypropylene composition (PC), includes any carrier polymers used to introduce the additives to said polypropylene composition (PC), i.e. masterbatch carrier polymers. An example of such a carrier polymer would be a polypropylene homopolymer in the form of powder.

**Article**

In another aspect, the present invention is directed to an article, preferably an injection-moulded article, comprising the polypropylene composition according to any one of the preceding claims in an amount of at least 95 wt.-%,

more preferably at least 98 wt.-%, most preferably at least 99 wt.-%.

Preferably the article, more preferably the injection-moulded article, is an automotive interior article, more preferably selected from the group consisting of dashboards, step assists, interior trims, ash trays, interior body panels and gear shift levers.

## EXAMPLES

### 1. Measuring methods

The following definitions of terms and determination methods apply for the above general description of the invention including the claims as well as to the below examples unless otherwise defined.

### Quantification of microstructure by NMR spectroscopy

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilising the NOE at short recycle delays of 3 s {pollard04, klimke06} and the RS-HEPT decoupling scheme {fillip05,griffin07}. A total of 1024 (1k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (*mmmm*) at 21.85 ppm.

Characteristic signals corresponding to the incorporation of 1-butene were observed {brandolini01} and the comonomer content quantified.

The amount of isolated 1-butene incorporated in PBP sequences was quantified using the integral of the $\alpha B2$ sites at 43.6 ppm accounting for the number of reporting sites per comonomer:

$$B = I_{\alpha B2} / 2$$

The amount of consecutively incorporated 1-butene in PBBP sequences was quantified using the integral of the $\alpha\alpha B2B2$ site at 40.5 ppm accounting for the number of reporting sites per comonomer:

$$BB = 2 * I_{\alpha\alpha B2B2}$$

In presence of BB the value of B must be corrected for the influence of the $\alpha B2$ sites resulting from BB:

$$B = (I_{\alpha B2} / 2) - BB/2$$

The total 1-butene content was calculated based on the sum of isolated and consecutively incorporated 1-butene:

$$B_{total} = B + BB$$

Characteristic signals corresponding to the incorporation of ethylene were observed {brandolini01} and the comonomer content quantified.

The amount of isolated ethylene incorporated in PEP sequences was quantified using the integral of the $S\beta\beta$ sites at 24.3 ppm accounting for the number of reporting sites per comonomer:

$$E = I_{S\beta\beta}$$

If characteristic signals corresponding to consecutive incorporation of ethylene in PEE sequence was observed the $S\beta\delta$ site at 27.0 ppm was used for quantification:

$$EE = I_{S\beta\delta}$$

Characteristic signals corresponding to regio defects were observed {resconi00}. The presence of isolated 2,1-erythro regio defects was indicated by the presence of the two methyl sites at 17.7 and 17.2 ppm, by the methylene site at 42.4 ppm and confirmed by other characteristic sites. The presence of 2,1 regio defect adjacent an ethylene unit was indicated by the two inequivalent $S\alpha\beta$ signals at 34.8 ppm and 34.4 ppm respectively and the $T\gamma\gamma$ at 33.7 ppm.

The amount of isolated 2,1-erythro regio defects ($P_{21e\ isolated}$) was quantified using the integral of the methylene site at 42.4 ppm ($I_{e9}$):

$$P_{21e\ isolated} = I_{e9}$$

If present the amount of 2,1 regio defect adjacent to ethylene ($P_{E21}$) was quantified using the methine site at 33.7 ppm ($I_{T\gamma\gamma}$):

$$P_{E21} = I_{T\gamma\gamma}$$

The total ethylene content was then calculated based on the sum of ethylene from isolated, consecutively incorporated and adjacent to 2,1 regio defects:

$$E_{total} = E + EE + P_{E21}$$

The amount of propylene was quantified based on the $S\alpha\alpha$ methylene sites at 46.7 ppm including all additional propylene units not covered by $S\alpha\alpha$ e.g. the factor $3*P_{21e\ isolated}$ accounts for the three missing propylene units from isolated 2,1-erythro regio defects:

$$P_{total} = I_{S\alpha\alpha} + 3*P_{21e\ isolated} + B + 0.5*BB + E + 0.5*EE + 2*P_{E21}$$

The total mole fraction of 1-butene and ethylene in the polymer was then calculated as:

$$fB = B_{total} / ( E_{total} + P_{total} + B_{total} )$$

$$fE = E_{total} / ( E_{total} + P_{total} + B_{total} )$$

The mole percent comonomer incorporation was calculated from the mole fractions:

$$B\ [mol\%] = 100 * fB$$

$$E\ [mol\%] = 100 * fE$$

The weight percent comonomer incorporation was calculated from the mole fractions:

$$B\ [wt.-\%] = 100 * ( fB * 56.11 ) / ( (fE * 28.05) + (fB * 56.11) + ((1-(fE+fB)) * 42.08) )$$

$$E\ [wt.-\%] = 100 * ( fE * 28.05 ) / ( (fE * 28.05) + (fB * 56.11) + ((1-(fE+fB)) * 42.08) )$$

The mole percent of isolated 2,1-erythro regio defects was quantified with respect to all propylene:

$$[21e]\ mol\% = 100 * P_{21e\ isolated} / P_{total}$$

The mole percent of 2,1 regio defects adjacent to ethylene was quantified with respect to all propylene:

$$[E21]\ mol\% = 100 * P_{E21} / P_{total}$$

The total amount of 2,1 defects was quantified as following:

$$[21]\ mol\% = [21e] + [E21]$$

Characteristic signals corresponding to other types of regio defects (2,1-threo, 3,1 insertion) were not observed {resconi00}.

Literature (as referred to above):

klimke06 Klimke, K., Parkinson, M., Piel, C., Kaminsky, W., Spiess, H.W., Wilhelm, M., Macromol. Chem. Phys. 2006;207:382.
parkinson07 Parkinson, M., Klimke, K., Spiess, H.W., Wilhelm, M., Macromol. Chem. Phys. 2007;208:2128.
pollard04 Pollard, M., Klimke, K., Graf, R., Spiess, H.W., Wilhelm, M., Sperber, O., Piel, C., Kaminsky, W., Macromolecules 2004;37:813.
filip05 Filip, X., Tripon, C., Filip, C., J. Mag. Resn. 2005, 176, 239
griffin07 Griffin, J.M., Tripon, C., Samoson, A., Filip, C., and Brown, S.P., Mag. Res. in Chem. 2007 45, S1, S198.
castignolles09 Castignolles, P., Graf, R., Parkinson, M., Wilhelm, M., Gaborieau, M., Polymer 50 (2009) 2373.
resconi00 Resconi, L., Cavallo, L., Fait, A., Piemontesi, F., Chem. Rev. 2000, 100, 1253.
brandolini01 A.J. Brandolini, D.D. Hills, "NMR spectra of polymers and polymer additives", Marcel Deker Inc., 2000

**CRYSTEX QC analysis**

***Crystalline and soluble fractions method***

The crystalline (CF) and soluble fractions (SF) of the polypropylene (PP) compositions as well as the comonomer content and intrinsic viscosities of the respective fractions were analyzed by use of the CRYSTEX instrument, Polymer Char (Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596)

The crystalline and amorphous fractions are separated through temperature cycles of dissolution at 160°C, crystallization at 40°C and re-dissolution in 1,2,4-trichlorobenzene at 160°C. Quantification of SF and CF and determination of ethylene content (C2) are achieved by means of an integrated infrared detector (IR4) and for the determination of the intrinsic viscosity (IV) an online 2-capillary viscometer is used.

The IR4 detector is a multiple wavelength detector measuring IR absorbance at two different bands (CH3 stretching vibration (centred at app. 2960 $cm^{-1}$) and the CH stretching vibration (2700-3000 $cm^{-1}$) that are serving for the determination of the concentration and the Ethylene content in Ethylene-Propylene copolymers. The IR4 detector is calibrated with series of 8 EP copolymers with known Ethylene content in the range of 2 wt.-% to 69 wt.-% (determined by 13C-NMR) and each at various concentrations, in the range of 2 and 13mg/ml. To encounter for both features, concentration and ethylene content at the same time for various polymer concentrations expected during Crystex analyses the following calibration equations were applied:

$$Conc = a + b*Abs(CH) + c*(Abs(CH))^2 + d*Abs(CH_3) + e*(Abs(CH_3))^2 + f*Abs(CH)*Abs(CH_3)$$

$$(Equation\ 1)$$

$$CH_3/1000C = a + b*Abs(CH) + c* Abs(CH_3) + d * (Abs(CH_3)/Abs(CH)) + e * (Abs(CH_3)/Abs(CH))^2$$

$$(Equation\ 2)$$

The constants a to e for equation 1 and a to f for equation 2 were determined by using least square regression analysis.

The $CH_3/1000C$ is converted to the ethylene content in wt.-% using following relationship:

$$Wt.\text{-}\%\ (Ethylene\ in\ EP\ Copolymers) = 100 - CH_3/1000TC * 0.3 \qquad (Equation\ 3)$$

Amounts of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%. The determined XS calibration is linear:

$$Wt.\text{-}\%\ XS = 1,01* Wt.\text{-}\%\ SF \qquad (Equation\ 4)$$

Intrinsic viscosity (IV) of the parent EP copolymer and its soluble and crystalline fractions are determined with a use of an online 2-capillary viscometer and are correlated to corresponding IV's determined by standard method in decalin according to ISO 1628-3. Calibration is achieved with various EP PP copolymers with IV = 2-4 dL/g. The determined calibration curve is linear:

$$IV\ (dL/g) = a* Vsp/c \qquad (equation\ 5)$$

The samples to be analyzed are weighed out in concentrations of 10mg/ml to 20mg/ml. To avoid injecting possible gels and/or polymers which do not dissolve in TCB at 160°C, like PET and PA, the weighed out sample was packed into a stainless steel mesh MW 0,077/D 0,05mmm.

After automated filling of the vial with 1,2,4-TCB containing 250 mg/l 2,6-tert-butyl-4-methylphenol (BHT) as antioxidant, the sample is dissolved at 160°C until complete dissolution is achieved, usually for 60 min, with constant stirring of 400rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt.%] of the PP composition. During the second injection the soluble fraction (at low temperature) and the crystalline fraction (at high temperature) with the crystallization cycle are measured (wt.-% SF, wt.-% C2, IV).

**Intrinsic viscosity**

The intrinsic viscosity (iV) is measured according to DIN ISO 1628/1, October 1999, in Decalin at 135°C.

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg.

**Density:**

The density is measured according to ISO 1183-187. Sample preparation is done by compression moulding in accordance with ISO 1872-2:2007.

**The xylene soluble fraction at room temperature (XCS, wt.-%):** The amount of the polymer soluble in xylene is determined at 25 °C according to ISO 16152; 5th edition; 2005-07-01.

**DSC analysis, melting temperature ($T_m$) and heat of fusion ($H_f$), crystallization temperature ($T_c$) and**

**heat of crystallization (H$_c$):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature (T$_c$) and crystallization enthalpy (H$_c$) are determined from the cooling step, while melting temperature (T$_m$) and melting enthalpy (H$_m$) are determined from the second heating step.

**The Flexural Modulus** is determined according to ISO 178 method A (3-point bending test) on 80 mm $\times$ 10 mm $\times$ 4 mm specimens. Following the standard, a test speed of 2 mm/min and a span length of 16 times the thickness was used. The testing temperature was 23$\pm$2° C. Injection moulding was carried out according to ISO 19069-2 using a melt temperature of 230°C for all materials irrespective of material melt flow rate.

**Notched impact strength (NIS)**

The Charpy notched impact strength (NIS) was measured according to ISO 179 1eA at +23°C or -20 °C, using injection moulded bar test specimens of 80$\times$ 10$\times$4 mm$^3$ prepared in accordance with ISO 19069-2 using a melt temperature of 230°C for all materials irrespective of material melt flow rate.

**Average particle size (diameter) $d_{50}$ and top cut $d_{95}$**

The particle size defintions were calculated from the particle size distribution [mass percent] as determined by laser diffraction method, using Laser Mastersizer, according to ISO 13320-1. The dso is defined as the median diameter, whilst d$_{95}$ is the diameter at the 95$^{th}$ percentile, as observed from the particle size distribution.

**Scratch Resistance**

To determine the scratch visibility, a Cross Hatch Cutter Model 420P, manufactured by Erichsen, was used. For the tests, plaques of 70$\times$70$\times$4 mm size were cut from a moulded grained plaque of size 140$\times$200$\times$4 mm (grain parameters: average grain size = 1 mm, grain depth = 0.12 mm, conicity = 6°). The period between injection moulding of specimens and scratch-testing was 7 days. For testing, the specimens must be clamped in a suitable apparatus as described above. Scratches were applied at a force of 10 N using a cylindrical metal pen with a ball shaped end (radius = 0.5 mm $\pm$ 0.01). A cutting speed of 1000 mm/min was used. A minimum of 20 scratches parallel to each other were brought up at a load of 10 N with a distance of 2 mm. The application of the scratches was repeated perpendicular to each other, so that the result was a scratching screen. The scratching direction should be unidirectional.

The scratch visibility is reported as the difference of the luminance, $\Delta$L, of the unscratched and the scratched areas. $\Delta$L values were measured using a spectrophotometer that fulfils the requirements to DIN 5033. A detailed test description of the test method (Erichsen cross hatch cutter method) can be found in the article "Evaluation of scratch resistance in multiphase PP blends" by Thomas Koch and Doris Machl, published in Polymer Testing, 26 (2007), p. 927-936.

**Black spot quantification (amount of defects having certain particle sizes)**

Digital images of 5 injection moulded plaques were collected with a Canon EOS R6 camera. Settings were fixed such that a resolution of about 15 pixel/mm were obtained. Once the image had been converted to grey scale and the intensity normalized between 0 and 256, the exposure time was fixed such that a grey level of ca. 160 was obtained for the plaques.

Image analysis was performed with the Wavemetrics IgorPro software. A Region of Interest area was fixed inside the plaques, with size of 2100 $\times$ 1125 pixels$^2$. A Prewitt edge detection algorithm, set with threshold of 10, was used to identify the particles on the surface. The edge image was then analysed to gather information about the number and size of particles detected, with a minimum area of 5 pixels and excluding particles touching the border of the area analysed. This operation was repeated for the 5 plaques imaged, and a size distribution of particles was created. The number of particles was normalized by the total area imaged in the 5 plaques, and therefore a frequency of particles as #/cm$^2$ was obtained. The particles were grouped in bins according to their size, with bin size of 0.05 mm$^2$.

**CIELAB color space (L\*a\*b\*)**

In the CIE L\*a\*b\* uniform color space, the color coordinates are: L\*-the lightness coordinate; a\*-the red/green coordinate, with +a\* indicating red, and -a\* indicating green; and b\*-the yellow/blue coordinate, with +b\* indicating yellow, and -b\* indicating blue. The L\*, a\*, and b\*coordinate axis define the three dimensional CIE color space. Standard Konica/Minolta Colorimeter CM-3700A.

**Inorganic residues**

Inorganic residues are quantified according to DIN ISO 1172:1996 using a Perkin Elmer TGA 8000. Approximately 10-20 mg of material was placed in a platinum pan. The temperature was equilibrated at 50°C for 10 minutes, and afterwards raised to 950°C under nitrogen at a heating rate of 20 °C/min. The ash content was evaluated as the weight % at 850°C.

**Limonene detection**

Limonene quantification can be carried out using solid phase microextraction (HS-SPME-GC-MS) by standard addition. 50 mg ground samples are weighed into 20 mL headspace vials and after the addition of limonene in different concentrations and a glass-coated magnetic stir bar, the vial is closed with a magnetic cap lined with silicone/PTFE. Micro capillaries (10 pL) are used to add diluted limonene standards of known concentrations to the sample. Addition of 0, 2, 20 and 100 ng equals 0 mg/kg, 0.1 mg/kg, 1mg/kg and 5 mg/kg limonene, in addition standard amounts of 6.6 mg/kg, 11 mg/kg and 16.5 mg/kg limonene is used in combination with some of the samples tested in this application. For quantification, ion-93 acquired in SIM mode is used. Enrichment of the volatile fraction is carried out by headspace solid phase microextraction with a 2 cm stable flex 50/30 pm DVB/Carboxen/PDMS fibre at 60°C for 20 minutes. Desorption is carried out directly in the heated injection port of a GCMS system at 270°C.

GCMS Parameters:

Column: 30 m HP 5 MS 0.25*0.25
Injector: Splitless with 0.75 mm SPME Liner, 270°C
Temperature program: -10°C (1 min)
Carrier gas: Helium 5.0, 31 cm/s linear velocity, constant flow
MS: Single quadrupole, direct interface, 280°C interface temperature
Acquisition: SIM scan mode
Scan parameter: 20-300 amu
SIM Parameter: m/Z 93, 100 ms dwell time

**Tiger stripes (MSE)**

The tendency to show flow marks was examined with a method as described below. This method is described in detail in WO 2010/149529 A1, which is incorporated herein in its entirety. An optical measurement system, as described by Sybille Frank et al. in PPS 25 Intern. Conf. Polym. Proc. Soc 2009 or Proceedings of the SPIE, Volume 6831, pp 68130T-68130T-8 20 (2008) was used for characterizing the surface quality. This method consists of two aspects:

1. Image recording:
The basic principle of the measurement system is to illuminate the plates with a defined light source (LED) in a closed environment and to record an image with a CCD-camera system.
2. Image analysis:
The specimen is floodlit from one side and the upwards reflected portion of the light is deflected via two mirrors to a CCD-sensor. The such created grey value image is analysed in lines. From the recorded deviations of grey values the mean square error (MSE) is calculated allowing a quantification of surface quality, i.e. the larger the MSE value the more pronounced is the surface defect.

Generally, for one and the same material, the tendency to flow marks increases when the injection speed is increased.

For this evaluation plaques 440×148×2.8 mm with grain VW K50 and a filmgate of 1.4 mm were used and were produced with different filling times of 1.5, 3 and 6 sec respectively.

Further conditions:

Melt temperature: 240°C
Mould temperature 30°C
Dynamic pressure: 10 bar hydraulic

**Fogging**

Fogging was measured according to ISO 75201:2011-11, method B (gravimetric method) on compression-moulded specimens (diameter 80 mm +/- 1mm, thickness 2 mm) cut out from an injection moulded plate. With this method, the mass of fogging condensate on aluminium foil in mg by means weighing of foil before and after the fogging test is determined. The term "fogging" refers to a fraction of volatile substances condensed on glass parts as e.g. the windscreen of a vehicle.

**Screening of organic emissions by thermo-desorption analysis (LBS and HBS**)

This method describes the semi-quantitative determination of organic compounds emitting from polyolefins. It is similar to the VDA 278 (October 2011) but includes specific adjustments.

Directly after the production the sample (injection moulded plaque, DIN-A5) is sealed in an aluminium-coated polyethylene bag and provided to the lab within 14 days. In the lab, it is stored openly for 7 days below 25 °C. After this period, an aliquot of 60 $\pm$ 5 mg is prepared from the stored sample. Trimming the aliquot should aim for a maximum coherent area. It is not the aim to create the largest possible surface area by cutting the aliquot into smaller pieces. The diameter of the sample injection tube should be used first. Length and thickness should be chosen accordingly, considering the specified aliquot weight. The aliquot is directly desorbed using heat and a flow of helium gas. Volatile and semi-volatile organic compounds are extracted into the gas stream and cryo-focused prior to the injection into a gas chromatographic (GC) system for analysis. The method comprises two extraction stages: In the analysis of low-boiling substances (LBS) the aliquot is desorbed at 90 °C for 30 min to determine volatile organic compounds in the boiling / elution range up to n-C25 (n-pentacosane). The analysis of high-boiling substances (HBS) involves a further desorption step of the same aliquot at 120 °C for 60 min to determine semi-volatile compounds in the boiling / elution range from n-C14 (n-tetradecane) to n-C32 (n-dotriacontane).

Similar to the VOC and FOG value in the VDA 278, the LBS is calculated as toluene equivalent (TE) and the HBS is calculated as hexadecane equivalent (HE) applying a semi-quantitation and a respective calibration. The result is expressed in "$\mu$g/g".

Integration parameters for the LBS and HBS evaluation are chosen in such way that the "area reject" corresponds to the area of 1 $\mu$g/g (TE and HE, respectively). Thus, smaller peaks do not add to the semi-quantitative result. The GC oven program is kept the same, no matter if a calibration run, an LBS run or an HBS run was performed. It starts at 50 °C (1 min hold), followed by a ramp of 10 °C/min and an end temperature of 320 °C (10 min hold). For the GC column an Agilent DB5: 50 m $\times$ 250 $\mu$m $\times$ 0.25 $\mu$m (or comparable) is used. The method requires a Thermal Desorption System TDS 3 (Gerstel) and a Cooled Injection System CIS 4 (Gerstel) as well as a GC system with a flame ionisation detector (FID) but does not involve a mass spectrometer. Instead of 280 °C the CIS end temperature is always set to 380 °C.

## 2. Examples

**2.1 Synthesis of heterophasic propylene-ethylene copolymers (HECOs)**

The catalyst used for producing HECO1 was a Ziegler-Natta catalyst commercially available from Lyondell Basell (IT), under the trade name ZN180M.

The catalyst used for producing HECO2 and HECO3 was a Ziegler-Natta catalyst from Borealis having Ti-content of 1.9 wt.-% (as described in EP 591 224). Before the polymerization, the catalyst was prepolymerized with vinyl-cyclohexane (VCH) as described in EP 1 028 984 and EP 1 183 307. The ratio of VCH to catalyst of 1:1 was used in the preparation, thus the final poly-VCH content was less than 100 ppm.

In the first stage the catalyst described above was fed into prepolymerization reactor together with propylene and small amount of hydrogen (2.5 g/h) and ethylene (330 g/h). Triethylaluminium as a cocatalyst and dicyclopentyldimethoxysilane as a donor was used. The aluminium to donor ratio was 7.5 mol/mol and aluminium to titanium ratio was 300 mol/mol. Reactor was operated at a temperature of 30 °C and a pressure of 55 barg.

The subsequent polymerization has been effected under the following conditions.

**Table 1** Polymerization conditions for the HECOs

|  |  | HECO1 | HECO2 | HECO3 |
|---|---|---|---|---|
| [Co]/[ED] | [mol/mol] | 10 | 6 | 40 |
| [Co]/[Ti] | [mol/mol] | 220 | 200 | 230 |
| Temperature | [°C] | 30 | 30 | 30 |
| Residence time | [min] | 5 | 0.25 | 5 |

(continued)

| Loop reactor | | | | |
|---|---|---|---|---|
| Temperature | [°C] | 75 | 85 | 72 |
| Split | [wt.-%] | 52 | 35 | 30 |
| H2/C3 | [kg/ton] | 22 | 65 | 19 |
| MFR$_2$ | [g/10 min] | 160 | 140 | 110 |
| **1st Gas phase reactor** | | | | |
| Temperature | [°C] | 80 | 85 | 80 |
| Split | [wt.-%] | 34 | 40 | 35 |
| H2/C3 | [mol/kmol] | 175 | 21 | 137 |
| MFR$_2$ | [g/10 min] | 160 | 55 | 80 |
| XCS | [wt.-%] | 2.0 | 1.9 | 2.0 |
| **2nd Gas phase reactor** | | | | |
| Temperature | [°C] | 80 | 85 | 70 |
| Split | [wt.-%] | 14 | 15 | 17 |
| H2/C3 | [mol/kmol] | 250 | 15 | 119 |
| C2/C3 | [mol/kmol] | 550 | 210 | 515 |
| MFR$_2$ | [g/10 min] | 99 | 20 | 15 |
| C2 | [wt.-%] | 6.5 | 4.5 | 7.9 |
| **3rd Gas phase reactor** | | | | |
| Temperature | [°C] | - | 85 | 85 |
| Split | [wt.-%] | - | 10 | 18 |
| H2/C3 | [mol/kmol] | - | 10 | 285 |
| C2/C3 | [mol/kmol] | - | 210 | 1429 |
| MFR$_2$ | [g/10 min] | - | 5.5 | 18 |
| C2 | [wt.-%] | - | 7 | 18.9 |
| **Final Properties (pellet)** | | | | |
| MFR$_2$ | [g/10 min] | 100 | 5.5 | 18 |
| C2 | [wt.-%] | 6.5 | 7.0 | 18.9 |
| SF | [wt.-%] | 15 | 23 | 30 |
| C2(SF) | [wt.-%] | 29 | 23 | 40 |
| iV(SF) | [dL/g] | 2.9 | 5.3 | 2.4 |
| T$_m$ | [°C] | 165 | 166 | 165 |
| T$_c$ | [°C] | 121 | 115 | 115 |

The heterophasic copolymers HECO1, HECO2 and HECO3 were compounded in a co-rotating twin-screw extruder Coperion ZSK 47 at 220°C with 0.15 wt.-% antioxidant (Irganox B215FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4); 0.05 wt.-% of of Ca-stearate (CAS-no.1592-23-0, commercially available from Faci, Italy).

**2.2 Mixed-plastic polypropylene blend (B)**

The properties of the mixed-plastic polypropylene blend are given in Table 2.

**Table 2 Properties of mixed-plastic polypropylene blends (B1, B2 and B3)**

|  |  | B1 | B2 | B3 |
|---|---|---|---|---|
| $MFR_2$ | [g/10 min] | 19 | 15 | 12 |
| C2(total) | [wt.-%] | 4.5 | 5.0 | 9 |
| SF | [wt.-%] | 10.0 | 10.0 | 10.0 |
| C2(SF) | [wt.-%] | 26.5 | 27.0 | 30 |
| iV(SF) | [dL/g] | 1.65 | 1.80 | 1.20 |
| CF | [wt.-%] | 90.0 | 90.0 | 90.0 |
| C2(CF) | [wt.-%] | 2.8 | 2.6 | 8 |
| iV(CF) | [dL/g] | 1.70 | 1.70 | 1.8 |
| Limonene content | [ppm] | > 1 | > 1 | > 1 |
| Inorganic residues | [wt.-%] | 2.0 | 2.0 | 2.0 |
| CIELAB L* | [-] | 54.05 | 91 | 53.79 |
| CIELAB a* | [-] | -5.32 | -1.56 | -2.96 |
| CIELAB b* | [-] | 1.61 | 6.79 | 2.66 |
| Black spot | [particles/cm$^2$] | < 0.5 | 0.5 | 1.0 |

**2.3 Compounding of Inventive and Comparative Compositions**

The inventive and comparative compositions were prepared based on the recipes indicated in Table 3 by compounding in a co-rotating twin-screw extruder Coperion ZSK 40 at 220°C.

In addition to the HECOs and the mixed-plastic polypropylene blends described above, the following commercially available components were also employed:

EC1 — an elastomeric ethylene-octene copolymer with a trade name of Engage 8180, commercially available from Dow Chemicals (USA), having an $MFR_2$ (190 °C) of 0.5 g/10 min and a density of 863 kg/m$^3$.

EC2 — an elastomeric ethylene-butene copolymer with a trade name of Engage HM 7487, commercially available from Dow Chemicals (USA), having an $MFR_2$ (190 °C) of < 0.5 g/10 min and a density of 860 kg/m$^3$.

HDPE — a bimodal, high density polyethylene with a trade name of BorPure™ MB7541, commercially available from Borealis AG (Austria), having an MFR2 (190 °C) of 4 g/10 min and a density of 954 kg/m$^3$.

F — talc with a trade name of Jetfine 3CA, commercially available from Imerys (France), with median diameter d50 of 3.9 μm and top cut diameter d95 of 7.8 μm.

Black MB — a polyethylene based masterbatch CBMB LD-09 A02 from Borealis AG (Norway). It contains 40 wt.-% of pigment.

White MB — a polyethylene based masterbatch Masterminds PE white 90/1111 from QolorTech (The Netherlands). It contains 70 wt.-% of pigment.

Red MB — a polyethylene based masterbatch Asterminds PE red 40/2215 from QolorTech (The Netherlands). It contains 60 wt.-% of pigment.

Yellow MB — a polyethylene based masterbatch Masterminds PE yellow 30/3243 containing yellow pigments from QolorTech (The Netherlands). It contains 60 wt.-% of pigment

Additives MB — an additive masterbatch, consisting of 1.20 wt.-% of a carrier propylene homopolymer with a trade name of HC001 A, commercially available from Borealis AG (Austria), 0.10 wt.-% of an antioxidant with a trade name of Irgafos 168 (CAS-no. 31570-04-4), available from BASF AG (Germany), 0.25 wt.-% of an antioxidant with a trade name of Irganox 1076 (CAS-no. 2082-79-3), commercially available from BASF AG (Germany), 0.50 wt.-% of bisphenol A-epoxy resin with a trade name of Araldite GT 7072 ES (CAS-no. 25036-25-3), commercially available from Huntsman Corporration (USA), 2.00 wt.-% of silicon masterbatch i.e. dimethyl siloxane:polypropylene=50:50 from Dow Corning. 0.20 wt.-% of a UV-stabiliser masterbatch with a trade name of Cyasorb UV-3808PP5, commercially available from Cytec Industries, Inc. (USA), and 0.20 wt.-% of a slip agent with a trade name of Crodamide EBS beads (CAS-no. 203-755-6), commercially available from Croda International (UK).

| | |
|---|---|
| Additives mixture | an additive mixture, consisting of 0.07 wt.-% of an of an antioxidant with a trade name of Irgafos 168 (CAS-no. 31570-04-4), available from BASF AG (Germany), 0.20 wt.-% of an antioxidant with a trade name of Irganox 1010 (CAS-no. 6683-19-8), commercially available from BASF AG (Germany), 0.20 wt.-% of an slip agent with a trade name of Crodamide ER beads (CAS-no. 204-009-2), available from Croda International (UK), 0.40 wt.-% of a UV-stabilizer with a trade name of Chimassorb 119 (CAS-no. 106990-43-6), available from BASF AG (Germany), 0.20 wt.-% of a nucleating agent with a trade name of ADK STAB LA-408XP (CAS-no. 91788-83-9), available from ADEKA Europe GmbH (Germany), 0.20 wt.-% of calcium stearate (CAS-no. 1592-23-0), available from Faci (Italy), and 0.13 wt.-% of an antifogging agent with a trade name of Atmer 129V beads (CAS-no. 307-332-8), available from Croda International (UK). |

The properties of the inventive and comparative compositions are given in Table 4.

**Table 3** Recipes for inventive and comparative examples

| | | CE1 | CE2 | CE3 | CE4 | CE5 | CE6 | IE1 | IE2 | IE3 | IE4 | IE5 | IE6 |
|---|---|---|---|---|---|---|---|---|---|---|---|---|---|
| HECO1 | [wt.-%] | 7.0 | 7.0* | - | 10.0 | - | 24.1 | 20.55 | 20.55* | 20.55* | 15.9 | 18.55* | 18.55 |
| HECO2 | [wt.-%] | 7.0 | 7.0* | - | - | 20.0* | 15.0 | 20.0 | - | 10.0* | 17.0* | 17.0* | 17.0 |
| HECO3 | [wt.-%] | 52.55 | 52.55* | 50.55* | 30.55* | 20.55* | - | - | 20.0* | 10.0* | - | - | - |
| B1 | [wt.-%] | - | - | 25.0 | 25.0 | 25.0 | - | 25.0 | 25.0 | 25.0 | - | 30.0 | 30.0 |
| B2 | [wt.-%] | - | - | - | - | - | - | - | - | - | 30.0 | - | - |
| B3 | [wt.-%] | - | - | - | - | - | 25.0 | - | - | - | - | - | - |
| EC1 | [wt.-%] | - | - | - | 10.0 | 10.0 | - | 10.0 | 10.0 | 10.0 | 10.0 | 10.0 | 10.0 |
| EC2 | [wt.-%] | - | - | - | - | - | 17.0 | - | - | - | - | - | - |
| HDPE | [wt.-%] | 9.0 | 9.0 | - | - | - | - | - | - | - | - | - | - |
| F | [wt.-%] | 15.0 | 15.0 | 15.0 | 15.0 | 15.0 | 15.5 | 15.0 | 15.0 | 15.0 | 15.0 | 15.0 | 15.0 |
| Black MB | [wt.-%] | 4.0 | 4.0 | 4.0 | 4.0 | 4.0 | 2.0 | 4.0 | 4.0 | 4.0 | 2.1 | 4.0 | 1.85 |
| White MB | [wt.-%] | 1.0 | 1.0 | 1.0 | 1.0 | 1.0 | - | 1.0 | 1.0 | 1.0 | 2.4 | 1.0 | 2.3 |
| Red MB | [wt.-%] | - | - | - | - | - | - | - | - | - | 2.45 | - | - |
| Yellow MB | [wt.-%] | - | - | - | - | - | - | - | - | - | 0.7 | - | 0.85 |
| Additives MB 1 | [wt.-%] | 4.45 | 4.45 | 4.45 | 4.45 | 4.45 | - | 4.45 | 4.45 | 4.45 | 4.45 | 4.45 | 4.45 |
| Additives MB2 | [wt.-%] | - | - | - | - | - | 1.4 | - | - | - | - | - | - |

\* the pellets of the HECOs in these examples were aerated before use, to remove volatile organic components as described in EP 3 786 190 A1.

**Table 4** Properties of the inventive and comparative compositions

| | | CE1 | CE2 | CE3 | CE4 | CE5 | CE6 | IE1 | IE2 | IE3 | IE4 | IE5 | IE6 |
|---|---|---|---|---|---|---|---|---|---|---|---|---|---|
| $MFR_2$ | [g/10 min] | 13 | 13 | 15 | 12 | 7 | 10 | 12 | 17 | 13 | 11 | 13 | 12 |
| C2(total) | [wt.-%] | 26.9 | 26.9 | 17.0 | 23.0 | 21.0 | 21.0 | 17.7 | 21.2 | 20.0 | 16.0 | 15.6 | 15.6 |
| iV(total) | [dL/g] | 1.80 | 1.80 | 1.72 | 1.70 | 2.03 | 1.90 | 1.84 | 1.65 | 1.77 | 1.83 | 1.87 | 1.87 |
| SF | [wt.-%] | 23.0 | 23.0 | 23.0 | 20.0 | 29.0 | 34.0 | 25.0 | 27.8 | 26.7 | 24.0 | 25.4 | 25.4 |
| C2(SF) | [wt.-%] | 41.5 | 41.5 | 36.0 | 55.0 | 52.0 | 54.0 | 53.2 | 55.0 | 54.7 | 54.0 | 51.9 | 51.9 |
| iV(SF) | [dL/g] | 2.57 | 2.57 | 2.33 | 2.11 | 2.72 | 2.30 | 2.59 | 2.10 | 2.36 | 2.32 | 2.41 | 2.41 |
| CF | [wt.-%] | 77.0 | 77.0 | 77.0 | 70.0 | 71.0 | 66.0 | 75.0 | 72.2 | 73.3 | 76.0 | 74.6 | 74.6 |
| C2(CF) | [wt.-%] | 22.5 | 22.5 | 11.0 | 11.0 | 9.2 | 5.5 | 6.2 | 8.6 | 7.2 | 6.0 | 3.8 | 3.8 |
| iV(CF) | [dL/g] | 1.60 | 1.60 | 1.50 | 1.48 | 1.70 | 1.70 | 1.61 | 1.46 | 1.55 | 1.67 | 1.66 | 1.66 |
| Limonene content | [ppm] | 0 | 0 | >1 | >1 | >1 | >1 | >1 | >1 | >1 | >1 | >1 | >1 |
| Flexural Modulus | [MPa] | 1640 | 1650 | 1900 | 1630 | 1540 | 1570 | 1750 | 1720 | 1710 | 1740 | 1870 | 1840 |
| Charpy NIS (+23 °C) | [kJ/m²] | n/m | 33 | 9 | 43 | 62 | 50 | 44 | 22 | 40 | 17 | 30 | 26 |
| Charpy NIS (-20 °C) | [kJ/m²] | 4.7 | 4.7 | 4.2 | 5.7 | 6.2 | 5.9 | 5.3 | 5.4 | 5.2 | 4.7 | 4.8 | 4.4 |
| Tiger stripes (MSE) | [-] | 20 | 25 | 23 | 30 | 26 | 65 | 13 | 15 | 10 | 12 | 3 | 3 |
| Scratch resistance (10 N) | [-] | 0.34 | 0.34 | 0.15 | 0.11 | 0.76 | n/m | 0.45 | 0.17 | 0.44 | 0.65 | 0.77 | 1.4 |
| LBS | [µg/g] | n/m | 72 | 33 | 46 | 29 | n/m | 81 | 35 | 34 | 30 | 75 | 26 |
| HBS | [µg/g] | n/m | 366 | 252 | 267 | 193 | n/m | 173 | 219 | 199 | 153 | 234 | 172 |
| Fogging | [mg] | 0.95 | 0.80 | n/m | n/m | 0.33 | n/m | 0.36 | 0.40 | 0.40 | 0.52 | 0.56 | 0.62 |

As can be seen from Table 4, the inventive examples, which all contain HECO1, a second and optionally third HECO, each selected from HECO2 and HECO3, EC1, B1 or B2, as well as the filler, pigment masterbatches and additive masterbatches, have notably improved surface homogeneity (i.e. reduced tiger stripes (MSE)).

When compared to CE6, which uses a different recyclate blend, the improved surface homogeneity is particularly notable, indicating the importance of using a recyclate blend having a low black spot contamination (i.e. low amount of defects with a particle size in the range from 0.05 to 0.10 mm$^2$).

Furthermore, the inventive examples show improved Flexural Modulus over the majority of the comparative examples at comparable impact strengths, with only CE3 showing high stiffness (coupled, however, with a much reduced impact strength).

By aerating the HECO pellets prior to use, the volatile and semi volatile organic compound contents (LBS and HBS respectively) are low in the inventive examples, which is a key finding, given that compositions containing recyclate blends are known to have issues with odor, which appear to have been avoided in the present case.

Finally (not shown in Table 4), it has been shown that for targeting light grey compositions (in contrast to black compositions, as IE1, IE2, IE3 and IE5 and all the comparative examples), the use of recyclate blend B2 in IE4 leads to improved CIELAB values (L* 64.80, a* 0.0, b* 3.2). In order to reach a desired gray coloration, these values need to fall into precisely defined ranges for L* 64.8± 0.4, a* 0.0 ±0.3, b* 3.2±0.3. The CIELAB values a* and b* are out of the pre-defined ranges in case the blend B1 is used in IE6 (CIELAB values L* 65.05, a* 0.69, b* 4.33). It can be seen that even by using less black and similar white and yellow pigmentation the desired gray coloration cannot be achieved in case of IE6.

**Claims**

1. A polypropylene composition (PC) being a mixed-plastic polypropylene blend, wherein the polypropylene composition (PC) has:

   a) a melt flow rate (MFR$_2$), determined according to ISO 1133 at 230 °C and 2.16 kg, in the range from 5.0 to 19.0 g/10 min;
   b) a flexural modulus, determined according to ISO 178 using $80\times10\times4$ mm$^3$ test bars injection-moulded in line with ISO 19069-2, in the range from 1500 to 2200 MPa;
   c) an MSE surface quality value, determined on $440\times 148\times2.8$ mm$^3$ test specimens produced at a filling time of 3 s during injection-moulding, in the range from 3 to 19; and
   d) a limonene content, determined by solid phase microextraction (HS-SPME-GC-MS), in the range from 0.10 to 25.0 ppm;

   wherein the polymeric part of said polypropylene composition (PC) has:

   i) an ethylene content (C2(total)), determined by FT-IR spectroscopy calibrated by quantitative $^{13}$C-NMR spectroscopy, in the range from 10.0 to 30.0 wt.-%;
   ii) a crystalline fraction (CF) content, determined according to CRYSTEX QC analysis, in the range from 60.0 to 80.0 wt.-%, said crystalline fraction (CF) having an ethylene content (C2(CF)), determined by FT-IR spectroscopy calibrated by quantitative $^{13}$C-NMR spectroscopy, in the range from 2.0 to 10.0 wt.-%, and an intrinsic viscosity (iV(CF)), determined according to DIN ISO 1628/1, in the range from 1.00 to 2.00 dL/g; and
   iii) a soluble fraction (SF) content, determined according to CRYSTEX QC analysis, in the range from 20.0 to 40.0 wt.-%, said soluble fraction (SF) having an ethylene content (C2(SF)), determined by FT-IR spectroscopy calibrated by quantitative $^{13}$C-NMR spectroscopy, in the range from 45.0 to 65.0 wt.-%, and an intrinsic viscosity (iV(SF)), determined according to DIN ISO 1628/1, in the range from 1.80 to 3.60 dL/g.

2. The polypropylene composition (PC) according to claim 1, having at least one, preferably each, of the following properties:

   a) a content of low boiling organic substances (LBS), determined by screening of organic emissions by thermo-desorption analysis, in the range from 5 to 170 μg/g;
   b) a content of high boiling organic substances (HBS), determined by screening of organic emissions by thermo-desorption analysis, in the range from 10 to 300 μg/g; and
   c) an amount of fogging, determined according to the gravimetric method DI 75201:2011-11, method B, in the range from 0.05 to 1.00 mg.

3. The polypropylene composition (PC) according to either claim 1 or 2, having a scratch resistance at 10 N in the range from 0.00 to 1.00.

4. The polypropylene composition (PC) according any one of the preceding claims, having at least one, preferably both, of the following properties:

   a) a Charpy Notched impact strength at 23 °C, determined according to ISO 179 using $80\times 10\times4$ mm$^3$ test bars injection-moulded in line with ISO 19069-2, in the range from 10.0 to 70.0 kJ/m$^2$; and
   b) a Charpy Notched impact strength at -20 °C, determined according to ISO 179 using $80\times10\times4$ mm$^3$ test bars injection-moulded in line with ISO 19069-2, in the range from 4.0 to 12.0 kJ/m$^2$.

5. The polypropylene composition (PC) according to any one of the preceding claims, being obtainable by blending at least components a) to h):

   a) from 10.0 to 25.0 wt.-%, relative to the total weight of the polypropylene composition (PC), of a first heterophasic propylene-ethylene copolymer (HECO1), having a melt flow rate (MFR$_2$), determined according to ISO 1133 at 230 °C and 2.16 kg, in the range from 90 to 250 g/10 min and an intrinsic viscosity, determined according to DIN ISO 1628/1, of the soluble fraction (iV(SF)), according to CRYSTEX QC analysis, in the range from 2.00 to 4.00 dL/g;
   b) from 0.0 to 25.0 wt.-%, relative to the total weight of the of the polypropylene composition (PC), of a second heterophasic propylene-ethylene copolymer (HECO2), having a melt flow rate (MFR$_2$), determined according to ISO 1133 at 230 °C and 2.16 kg, in the range from 3.0 to 30 g/10 min and an intrinsic viscosity, determined according to DIN ISO 1628/1, of the soluble fraction (iV(SF)), according to CRYSTEX QC analysis, in the range from 4.10 to 10.00 dL/g;
   c) from 0.0 to 25.0 wt.-%, relative to the total weight of the polypropylene composition (PC), of a third heterophasic propylene-ethylene copolymer (HECO3), having a melt flow rate (MFR$_2$), determined according to ISO 1133 at 230 °C and 2.16 kg, in the range from 5.0 to 30 g/10 min and an intrinsic viscosity, determined according to DIN ISO 1628/1, of the soluble fraction (iV(SF)), according to CRYSTEX QC analysis, in the range from 2.00 to 4.00 dL/g;
   d) from 20.0 to 35.0 wt.-%, relative to the total weight of the polypropylene composition (PC), of a mixed-plastic polypropylene blend (B) having an amount of defects with a particle size in the range from 0.05 to 0.10 mm$^2$ in the range from 0.1 to 1.0 particles/cm$^2$;
   e) from 5.0 to 15.0 wt.-% of an ethylene-octene elastomer (EC);
   f) from 5.0 to 20.0 wt.-% of an inorganic filler (F);
   g) from 0.5 to 10.0 wt.-% of a pigment masterbatch (P), which comprises one or more pigments, wherein the total pigment content is in the range from 40.0 to 80.0 wt.-%, relative to the total weight of the pigment masterbatch (P); and
   h) from 0.2 to 5.0 wt.-% of further additives (A),
   wherein the total content of the second heterophasic propylene-ethylene copolymer and the third heterophasic propylene-ethylene copolymer (HECO2 + HECO3) is in the range from 10.0 to 25.0 wt.-%,
   wherein the ratio of the content of the first heterophasic propylene-ethylene copolymer (HECO1) to the total content of the second heterophasic propylene-ethylene copolymer and the third heterophasic propylene-ethylene copolymer (HECO2 + HECO3), ([HECO1]/[HECO2 + HECO3]), is in the range from 0.50 to 1.33,
   wherein the total contents of components a) to h) add up to at least 95 wt.-%, more preferably at least 98 wt.-%, most preferably 100 wt.-%, relative to the total weight of the polypropylene composition (PC).

6. The polypropylene composition (PC) according to claim 5, wherein the ethylene-octene elastomer (EC) has a melt flow rate (MFR$_2$), determined according to ISO 1133 at 190 °C and 2.16 kg, in the range from 0.2 to 2.5 g/10 min and/or a density, determined according to ISO 1183-187, in the range from 850 to 870 kg/m$^3$.

7. The polypropylene composition (PC) according to either claim 5 or 6, wherein the filler is talc, preferably having a median particle size dso before compounding in the range from 1.0 to 15.0 $\mu$m and/or a top-cut particle size d$_{95}$ before compounding in the range from 2.0 to 30.0 $\mu$m.

8. The polypropylene composition (PC) according to any one of claims 5 to 7, wherein the first heterophasic propylene-ethylene copolymer (HECO1) has:

   a) a soluble fraction (SF) content, determined according to CRYSTEX QC analysis, in the range from 8.0 to 19.5 wt.-%; and/or

b) an ethylene content of the soluble fraction (C2(SF)), according to CRYSTEX QC analysis, determined by FT-IR spectroscopy calibrated by quantitative $^{13}$C-NMR spectroscopy, in the range from 31 to 45 wt.-%.

9. The polypropylene composition (PC) according to any one of claims 5 to 8, wherein the second heterophasic propylene-ethylene copolymer (HECO2) has:

a) a soluble fraction (SF) content, determined according to CRYSTEX QC analysis, in the range from 20.0 to 40.0 wt.-%; and/or

b) an ethylene content of the soluble fraction (C2(SF)), according to CRYSTEX QC analysis, determined by FT-IR spectroscopy calibrated by quantitative $^{13}$C-NMR spectroscopy, in the range from 18 to 30 wt.-%.

10. The polypropylene composition (PC) according to any one of claims 5 to 9, wherein the third heterophasic propylene-ethylene copolymer (HECO3) has:

a) a soluble fraction (SF) content, determined according to CRYSTEX QC analysis, in the range from 20.0 to 40.0 wt.-%; and/or

b) an ethylene content of the soluble fraction (C2(SF)), according to CRYSTEX QC analysis, determined by FT-IR spectroscopy calibrated by quantitative $^{13}$C-NMR spectroscopy, in the range from 31 to 45 wt.-%.

11. The polypropylene composition (PC) according to any one of claims 5 to 10, wherein the mixed-plastic polypropylene blend (B) has:

a) a melt flow (MFR$_2$), determined according to ISO 1133 at 230 °C and 2.16 kg, in the range from 10.0 to 40.0 g/10 min;

b) a soluble fraction (SF) content in the range from 4.0 to 15.0 wt.-% and a crystalline fraction (CF) in the range from 85.0 to 96.0 wt.-%, both determined according to CRYSTEX QC analysis;

c) an ethylene content of the crystalline fraction (C2(CF)), according to CRYSTEX QC analysis, determined by FT-IR spectroscopy calibrated by quantitative $^{13}$C-NMR spectroscopy, in the range from 1.0 to 10.0 wt.-%;

d) an intrinsic viscosity of the soluble fraction (iV(SF)), according to CRYSTEX QC analysis, determined according to DIN ISO 1628/1, in the range from 0.90 to 2.10 dL/g;

e) an inorganic residue content, as determined by calcination analysis according to DIN ISO 1172:1996, of 0.05 to 3.0 wt.-%;

f) a limonene content, determined by solid phase microextraction (HS-SPME-GC-MS), in the range from 0.10 to 25.0 ppm;

g) a CIELAB colour space (L*a*b) of

i) L* of from 50.0 to 97.0, more preferably from 80.0 to 97.0;
ii) a* of from -5.0 to 0.0;
iii) b* of from 0.0 up to, but not including, 22.0.

12. The polypropylene composition (PC) according to claim 11, wherein the mixed-plastic polypropylene blend (B) comprises one or more of polystyrene, polyamide-6 and fatty acids.

13. The polypropylene composition (PC) according to any one of claims 5 to 12, wherein the mixed-plastic polypropylene blend (B) originates from post-consumer waste.

14. An article, preferably an injection-moulded article, comprising the polypropylene composition according to any one of the preceding claims in an amount of at least 95 wt.-%, more preferably at least 98 wt.-%, most preferably at least 99 wt.-%.

Europäisches
Patentamt

European
Patent Office

Office européen
des brevets

# EUROPEAN SEARCH REPORT

Application Number

EP 21 21 2947

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2022/034126 A1 (BOREALIS AG [AT]) 17 February 2022 (2022-02-17) * examples IE2, IE3 * | 1-14 | INV. C08L23/14 C08F210/06 |
| E | WO 2022/034127 A1 (BOREALIS AG [AT]) 17 February 2022 (2022-02-17) * example IE2 * | 1-14 | |
| E | WO 2022/034125 A1 (BOREALIS AG [AT]) 17 February 2022 (2022-02-17) * example IE2 * | 1-14 | |
| A | US 2015/166776 A1 (KOCK CORNELIA [AT] ET AL) 18 June 2015 (2015-06-18) * examples IE1, IE2 * | 1-14 | |

TECHNICAL FIELDS
SEARCHED       (IPC)

C08F
C08L

The present search report has been drawn up for all claims

| Place of search | Date of completion of the search | Examiner |
|---|---|---|
| Munich | 17 May 2022 | Balmer, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 2947

17-05-2022

| Patent document cited in search report | | Publication date | Patent family member(s) | | Publication date |
|---|---|---|---|---|---|
| WO 2022034126 | A1 | 17-02-2022 | NONE | | |
| WO 2022034127 | A1 | 17-02-2022 | NONE | | |
| WO 2022034125 | A1 | 17-02-2022 | NONE | | |
| US 2015166776 | A1 | 18-06-2015 | BR | 112013022136 A2 | 06-12-2016 |
| | | | CN | 103443194 A | 11-12-2013 |
| | | | EP | 2495280 A1 | 05-09-2012 |
| | | | EP | 2681277 A1 | 08-01-2014 |
| | | | US | 2015166776 A1 | 18-06-2015 |
| | | | WO | 2012117086 A1 | 07-09-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010149529 A1
- EP 1028984 A
- EP 1183307 A
- EP 3786190 A1

**Non-patent literature cited in the description**

- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45 (S1), S198
- **CASTIGNOLLES, P. ; GRAF, R. ; PARKINSON, M. ; WILHELM, M. ; GABORIEAU, M.** *Polymer,* 2009, vol. 50, 2373
- **RESCONI, L. ; CAVALLO, L. ; FAIT, A. ; PIEMONTESI, F.** *Chem. Rev.,* 2000, vol. 100, 1253
- **A.J. BRANDOLINI ; D.D. HILLS.** NMR spectra of polymers and polymer additives. Marcel Deker Inc, 2000

- **LJILJANA JEREMIC ; ANDREAS ALBRECHT ; MARTINA SANDHOLZER ; MARKUS GAHLEITNER.** Rapid characterization of high-impact ethylene-propylene copolymer composition by crystallization extraction separation: comparability to standard separation methods. *International Journal of Polymer Analysis and Characterization,* 2020, vol. 25 (8), 581-596
- **THOMAS KOCH ; DORIS MACHL.** Evaluation of scratch resistance in multiphase PP blends. *Polymer Testing,* 2007, vol. 26, 927-936
- **SYBILLE FRANK et al.** *PPS 25 Intern. Conf. Polym. Proc. Soc 2009 or Proceedings of the SPIE,* 2008, vol. 6831 (20), 68130T-68130T, 8
- *CHEMICAL ABSTRACTS,* 6683-19-8
- *CHEMICAL ABSTRACTS,* 31570-04-4
- *CHEMICAL ABSTRACTS,* 1592-23-0
- *CHEMICAL ABSTRACTS,* 2082-79-3
- *CHEMICAL ABSTRACTS,* 25036-25-3
- *CHEMICAL ABSTRACTS,* 203-755-6
- *CHEMICAL ABSTRACTS,* 204-009-2
- *CHEMICAL ABSTRACTS,* 106990-43-6
- *CHEMICAL ABSTRACTS,* 91788-83-9
- *CHEMICAL ABSTRACTS,* 307-332-8